# EUROPÄISCHE PATENTSCHRIFT

(11) **EP 2 047 307 B1**
(45) Veröffentlichungstag und Bekanntmachung des Hinweises auf die Patenterteilung: **30.11.2011**
(21) Anmeldenummer: 07785827.2
(22) Anmeldetag: 16.06.2007
(51) Int. Cl.: G02B 6/00, F21S 8/10, F21S 8/12

(54) **LICHTLEITERSYSTEM**
OPTICAL FIBER SYSTEM
SYSTÈME DE GUIDES D'ONDES OPTIQUES

(30) Priorität: 28.07.2006 DE 102006034972
(43) Veröffentlichungstag der Anmeldung: 15.04.2009
(73) Patentinhaber: Bayerische Motoren Werke Aktiengesellschaft, 80809 München (DE)
(72) Erfinder: ERDL, Helmut, 83569 Vogtareuth (DE)
(86) Internationale Anmeldenummer: PCT/EP2007/005324
(87) Internationale Veröffentlichungsnummer: WO 2008/011938

(56) Entgegenhaltungen:
- EP-A2- 0 689 002
- EP-A2- 0 689 002
- WO-A-2006/003595
- DE-A1- 10 204 481
- DE-A1- 10 252 228
- FR-A1- 2 730 038

## Beschreibung

Die Erfindung betrifft ein zwei Lichtleiter umfassendes Lichtleitersystem.

Die rasante technologische Entwicklung auf dem Gebiet der Kraftfahrzeugbeleuchtungstechnik führt in letzter Zeit immer häufiger zum Einsatz von Lichtleitern. So ist beispielsweise aus der DE 10317062 A1 eine Beleuchtungseinrichtung für Kraftfahrzeuge bekannt, umfassend einen stabförmigen Lichtleiter zur totalreflektierenden Leitung von Licht, welches von wenigstens einer Lichtquelle über wenigstens eine als Einkoppelfläche ausgestaltete Stirnfläche des Lichtleiters einkoppelbar ist. Zudem weist die Beleuchtungseinrichtung wenigstens eine parallel zur Längsachse angeordnete Auskoppelfläche zur wenigstens teilweisen Auskopplung von Licht aus dem Lichtleiter und eine parallel zur Längsachse des Lichtleiters angeordnete Wechselwirkungsfläche auf, mit welcher Teile des Lichts in dem Lichtleiter unter Aufhebung der Totalreflexionsbedingungen zum Zwecke der Auskopplung wechselwirken können.

Insbesondere aus Kostengründen werden zunehmend Lichtleiter aus Kunststoff eingesetzt. Eine hohe visuelle Transmission bei gleichzeitig geringer thermischer Absorption innerhalb eines Lichtleitermaterials ist dabei enorm wichtig für die optische Performance und eine Dauerbelastbarkeit des Lichtleitermaterials ohne Thermooxidation (Vergilbung). Kunststoffe mit zufrieden stellender optischer Transmission und gleichzeitig hoher thermischer Belastbarkeit sind aber nicht für alle Zwecke verfügbar, insbesondere nicht für den Einsatz in Kraftfahrzeugscheinwerfem.

Zur Temperatursenkung am Lichtleiter kann ein Lichtleiterzwischenstück aus temperaturbeständigerem Material zwischen Lichtquelle und temperaturempfindlichem Lichtleiter angeordnet, wodurch der Abstand zwischen heißer Lichtquelle und temperaturempfindlichem Lichtleiter vergrößert wird. Dadurch kann die Umgebungstemperatur des temperaturempfindlichen Lichtleitermaterials reduziert werden. Der Nachteil dabei ist, dass diese Maßnahme in der Praxis nicht ausreicht, da die Eigenerwärmung des empfindlichen Lichtleitermaterials aufgrund seiner Absorptionslinien im infraroten Spektralbereich zu groß ist.

Um die Eigenerwärmung zu reduzieren, kann dem Lichtleiter ein Infrarot(IR)-Filter vorangesetzt werden, das den IR-Anteil der Strahlung reduziert. Reflexionsfilter können allerdings bei hohen Strahlleistungen die spektralen Absorptionsanteile nicht genügend stark reduzieren, ohne gleichzeitig die visuelle Transmission im sichtbaren Bereich stark einzuschränken. Alternativ dazu können Absorptionsfilter verwendet werden, welche den Nachteil mit sich bringen, dass sie die IR-Strahlung über eine nur kurze Wegstrecke abbauen und dadurch hohe Temperaturen erzeugen, die den benachbarten Lichtleiter ebenfalls stark erhitzen.

WO 2006/003595 A offenbart ein Lichtleitersystem bestehend aus einem Glaslichtleiter und einem optisch nachgeschalteten Kunststofflichtleiter. Durch das Lichtleitersystem wird von einer Lichtquelle stammendes Licht inklusive IR-Anteilen geleitet. Um eine ungewünschte Erwärmung des Kunststofflichtleiters durch die IR-Anteile möglichst zu vermeiden, sieht die WO 2006/003595 A einen breitbandigen (800 bis 2500 nm) Absorptionsfilter vor, der entweder dem Lichtleitersystem vorgeschaltet sein kann oder Bestandteil des Glaslichtleiters sein kann. Durch diesen breitbandigen (800 bis 2500 nm) Absorptionsfilter wird vielmehr IR-Energie absorbiert als eigentlich nötig wäre. Es wird IR-Energie in Wellenlängenbereichen absorbiert, die für den nachgeschalteten Kunststofflichtleiter gar nicht schädlich wären, da durch diesen IR-Energie in diesen Wellenlängenbereichen gar nicht absorbiert werden würde.

Der Erfindung liegt nun die Aufgabe zu Grunde, ein Lichtleitersystem anzugeben, das über eine hohe Strahlungs-Durchlässigkeit im sichtbaren Wellenlängenbereich verfügt, und das auch beim Leiten hoher Strahlungsleistungen über längere Zeiten stabil funktioniert.

Diese Aufgabe wird durch die Merkmale des Hauptanspruchs gelöst. Vorteilhafte Weiterbildungen der Erfindung sind den abhängigen Ansprüchen zu entnehmen.

Die Erfindung basiert demnach auch auf dem Gedanken, einen Filter als Lichtleiterzwischenstück (erster Lichtleiter) auszuführen, das temperaturverträglicher ist als der eigentliche Lichtleiter (zweiter Lichtleiter), und zudem das Lichtleiterzwischenstück derart auszuführen, dass es im infraroten Spektralbereich zumindest eine gemeinsame Absorptionslinie mit dem eigentlichen Lichtleiter, oder einen gemeinsamen Absorptionsbereich mit dem eigentlichen Lichtleiter oder ein ähnliches Absorptionsverhalten wie der eigentliche Lichtleiter aufweist.

Es ist ein Lichtleitersystem mit einem ersten Lichtleiter und einem zweiten Lichtleiter nach Anspruch 1 vorgesehen.

Dadurch wird erreicht, dass erstens der temperaturempfindlichere Lichtleiter entfernt von der Lichtquelle angeordnet ist und dadurch nicht unmittelbar durch die Lichtquelle erhitzt wird; und dass zweitens das temperaturverträglichere Lichtleiterzwischenstück im Frequenzbereich der gemeinsamen Absorptionslinie(n) zumindest einen großen Teil der Strahlungsenergie absorbiert, wodurch verhindert wird, dass der eigentliche Lichtleiter durch diesen Teil der Strahlungsenergie erwärmt und gegebenenfalls beschädigt, insbesondere vergilbt, wird. Die Absorption der Strahlungsenergie und/oder der Abbau der absorbierten Strahlungsenergie findet dabei vorzugsweise über die gesamte Länge des Lichtleiterzwischenstücks, das vorzugsweise mindestens 5 Millimeter, mindestens 10 Millimeter, mindestens 15 Millimeter oder mindestens 20 Millimeter lang ist, statt, so dass lokale Temperaturspitzen im als Filter wirkenden Lichtleiterzwischenstück reduziert oder vermieden werden.

Insgesamt wird dadurch ein Lichtleitersystem geschaffen, das über eine hohe Strahlungs-Durchlässigkeit im sichtbaren Wellenlängenbereich verfügt und auch bei der Leitung hoher Strahlungsleistungen über längere Zeiten stabil funktioniert.

Der erste und der zweite Lichtleiter sind aus Kunststoff hergestellt oder bestehen daraus. Besonders bevorzugt sind die Lichtleiter, insbesondere stab- oder schlauchförmig, länglich, entlang der Lichtausbreitungsrichtung ausgeführt. Selbstverständlich liegen auch Lichtleitersysteme im Rahmen der Erfindung, die neben dem ersten und zweiten Lichtleiter weitere Lichtleiter umfassen.

Der Begriff "temperaturverträglicher" umfasst im Rahmen der Anmeldung einen oder mehrere der Begriffe "thermisch stabiler", "temperaturbeständiger", "temperaturstabiler" oder "weniger vergilbungsanfällig" und bedeutet im Rahmen der Erfindung bezogen auf einen Lichtleiter insbesondere, dass sich der Lichtleiter oder das Material des Lichtleiters bei hohen Temperaturen und/oder hohen Strahlungsleistungen, insbesondere über längere Zeiträume, weniger verändert, insbesondere hinsichtlich seiner Strahlungs-Durchlässigkeit im sichtbaren Wellenlängenbereich weniger verschlechtert als ein Vergleichs-Lichtleiter oder ein Vergleichs-Material.

Besonders bevorzugt ist vorgesehen, dass der erste Lichtleiter und der zweite Lichtleiter insbesondere im infraroten Spektralbereich nicht nur mindestens eine gemeinsame oder identische Absorptionslinie aufweisen, sondern mindestens zwei identische Absorptionslinien, mindestens drei identische Absorptionslinien, mindestens fünf identische Absorptionslinien, mindestens sieben identische Absorptionslinien oder mindestens zehn identische Absorptionslinien aufweisen.

Alternativ oder ergänzend dazu ist vorgesehen, dass der erste und der zweite Lichtleiter ein ähnliches, ein im Wesentlichen identisches oder ein identisches Absorptionsverhalten, insbesondere im infraroten Spektralbereich, aufweisen. Vorteilhafterweise ist der erste Lichtleiter derart ausgeführt oder derart hinsichtlich des Absorptionsverhaltens im infraroten Spektralbereich, an den zweiten Lichtleiter angepasst, dass mindestens 50%, mindestens 70% oder mindestens 90% der durch beide Lichtleiter absorbierten Strahlungsleistung im infraroten Spektralbereich durch den ersten Lichtleiter absorbiert werden.

Ähnliche Absorptionsverhalten des ersten Lichtleiters und des zweiten Lichtleiters lassen sich dadurch erzielen, dass sie auf dem gleichen Material basieren oder das gleiche Material, wie beispielsweise Polycarbonat, umfassen.

Vorzugsweise sind der erste und der zweite Lichtleiter derart ausgeführt, dass der zweite Lichtleiter sichtbares Licht besser leitet, durchlässt oder transmittiert als der erste Lichtleiter.

Dazu können dem Material des zweiten Lichtleiters geeignete Additive beigemischt sein, welche die Lichtleitfähigkeit des zweiten Lichtleiters erhöhen.

Dadurch wird erreicht, dass der eigentlich als Lichtleiter wirkende zweite Lichtleiter, der zudem nicht hinsichtlich Temperaturverträglichkeit optimiert sein muss, die Transmissionsfähigkeit des gesamten Lichtleitersystems erhöht. Dies ist besonders dann vorteilhaft, wenn der erste Lichtleiter in Lichtausbreitungsrichtung kürzer ist als der zweite Lichtleiter.

Eine höhere Temperaturverträglichkeit des ersten Lichtleiters kann dadurch erreicht werden, dass dem Material des ersten Lichtleiters, beispielsweise Polycarbonat, geeignete Additive, wie beispielsweise Metalle beigemischt sind, dass die Länge der Molekülketten vergrößert wird, oder dass das Material des ersten Lichtleiters Polymethacrylmethylimid (PMMI) umfasst. Genannte Additive können dabei gegebenenfalls die Lichtleitfähigkeit des ersten Lichtleiters reduzieren.

Um Reflexionsverluste am Übergang der beiden Lichtleite zu reduzieren, ist vorzugsweise vorgesehen, dass die beiden Lichtleiter zusammen als Einzelteil oder einstückig, insbesondere in Zwei-Komponenten-Spritzgußtechnik, gebildet sind, wodurch zusätzlich Bauraum - und Montagevorteile und Potential zur Teilereduktion geschaffen werden.

Insbesondere auf dem Gebiet der Kraftfahrzeugscheinwerfer, insbesondere mit Leuchtringen, liegen hohe Umgebungstemperaturen und/oder große Lichtströme vor, die durch bekannte wirtschaftliche Kunststofflichtleiter nicht mit ausreichender Qualität geleitet werden können. Daher liegt im Rahmen der Erfindung insbesondere ein Kraftfahrzeugscheinwerfer mit einem der erläuterten Lichtleitersysteme, das derart ausgeführt ist, dass von einer Lichtquelle erzeugtes Licht mittels des ersten und/oder zweiten Lichtleiters zu einem Leuchtring geführt werden, der zumindest teilweise durch den zweiten Lichtleiter gebildet ist.

Im Folgenden wird die Erfindung anhand von Beispielen unter Bezugnahme auf die folgende Figur näher erläutert:

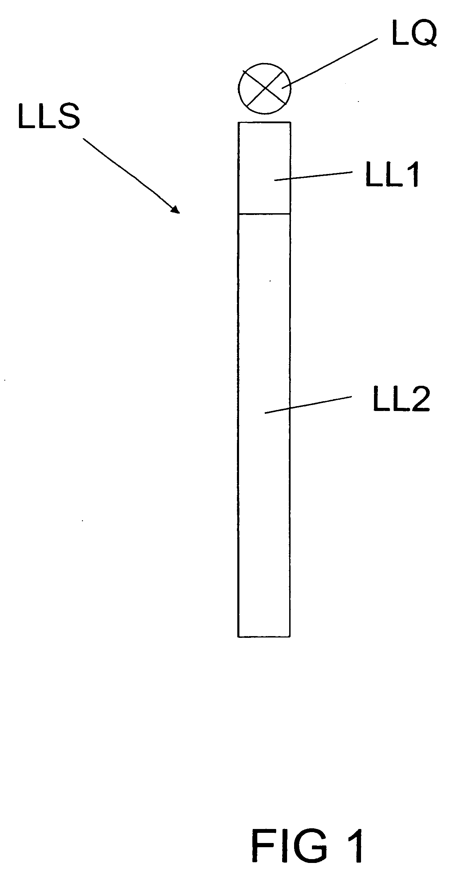

- Figur 1: zeigt eine vereinfachte Prinzipdarstellung eines Lichtleitersystems.

Figur 1 zeigt ein Lichtleitersystem LLS umfassend einen ersten Lichtleiter LL1, der von einer Lichtquelle LQ gespeist wird, und einen in Lichtausbreitungsrichtung dem ersten Lichtleiter LL1 nachgeordneten zweiten Lichtleiter LL2. Beide Lichtleiter LL1, LL2 sind vorzugsweise Bestandteile eines durch ein Zwei-Komponenten-Spritzguss-Verfahren hergestellten Kunststoffelementes.

Der erste Lichtleiter LL1 ist ein Lichtleiterzwischenstück, das als Absorptionsfilter wirkt und den nötigen Abstand zwischen Lichtquelle LQ und zweitem Lichtleiter LL2 gewährleistet. Dabei ist das Material des Lichtleiterzwischenstücks hinsichtlich hoher Temperaturstabilität ausgewählt oder optimiert, da die IR-Absorption zu dessen Erhitzung führt. In der Regel weisen solche temperaturstabileren Materialien (beispielsweise PMMI) geringere visuelle Transmissionswerte auf, als rein auf visuelle Transmsission optimierte Materialien (beispielsweise Makrolon). Da die IR-Strahlung in solchen Kunststoffen bereits nach wenigen Zentimetern Materialdicke im Wesentlichen abgebaut ist, und dessen Temperatur reduziert ist, kann sich der zweite hochtransmissive Lichtleiter LL2 schon nach wenigen Zentimetern in Lichtausbreitungsrichtung unmittelbar an den ersten Lichtleiter LL1 anschließen. Auf diese Weise lassen sich Lichtleitersysteme mit Längen von mehr als 15cm sehr effizient mit hohen Transmissionswerten erzeugen, ohne das Material thermisch zu überlasten.

Vorzugsweise handelt es sich bei der Materialkombination der beiden Lichtleiter um Materialien, die ein ähnliches Absorptionsverhalten besitzen. Dadurch wird erreicht, dass durch den ersten Lichtleiter LL1 im Wesentlichen nur die, aber auch gerade die, auch den zweiten Lichtleiter LL2 potentiell erwärmenden Absorptionslinien aus dem IR-Spektrum herausgefiltert werden und so die Energieumwandlung im ersten Lichtleiter LL1 in Wärme minimiert wird. Dies erlaubt eine weitere Steigerung des maximal transportierbaren Lichtstroms im gesamten Lichtleitersystem LLS.

Im Folgenden werden noch einmal Vorteile der Erfindung oder ihrer Weiterbildungen zusammengefasst:
- Aufgrund der gleichen Absorptionslinien in beiden Lichtleitern LL1,LL2 wird von der wärmeerzeugenden IR-Strahlung nur so wenig, wie unbedingt notwendig, im ersten Lichtleiter absorbiert. Dies führt zu einer möglichst geringen Erwärmung des ersten Lichtleiters. Gleichzeitig wird aber im ersten Lichtleiter genau die IR-Strahlung absorbiert, die den zweiten Lichtleiter erwärmen würde. Dies führt zu einer möglichst geringen Erwärmung des zweiten Lichtleiters.
- Aufgrund der in Lichtausbreitungsrichtung länglichen Ausdehnung des ersten Lichtleiters kann diese erzeugte Wärme über beispielsweise 10mm Länge verteilt abtransportiert oder abgebaut werden, was einerseits den Abstand des Ortes maximaler Temperatur im ersten Lichtleiter LL1 zum temperaturempfindlichen zweiten Lichtleiter LL2 erhöht und andererseits die lokale Belastung im ersten Lichtleiter LL1 aufgrund des räumlich ausgedehnten Wärmeabbaus reduziert.
- Aufgrund der Zweiteilung des Lichtleitersystems kann der erste, kürzere Lichtleiter LL1 hinsichtlich höherer Temperaturverträglichkeit ausgewählt werden, während das zweite, längere Lichtleitermaterial hinsichtlich maximaler visueller Transmission ausgewählt werden kann.

Das gesamte Lichtleitersystem zeichnet sich durch eine hohe Strahlungsbelastbarkeit bei guter optischer Gesamttransmission aus.

## Patentansprüche

1. Lichtleitersystem (LLS)
- mit einem ersten Lichtleiter (LL1) und einem zweiten Lichtleiter (LL2),
- wobei der zweite Lichtleiter (LL2) dem ersten Lichtleiter (LL1) in Lichtausbreitungsrichtung nachgeschaltet ist,
- wobei der erste Lichtleiter (LL1) temperaturverträglicher ist als der zweite Lichtleiter (LL2),
- wobei der erste Lichtleiter (LL1) und der zweite Lichtleiter (LL2) im infraroten Spektralbereich zumindest eine gemeinsame Absorptionslinie aufweisen, und
- wobei der zweite Lichtleiter aus Kunststoff besteht, und
**dadurch gekennzeichnet, dass**
der erste Lichtleiter aus Kunststoff besteht.

2. Lichtleitersystem (LLS) nach Anspruch 1,
bei dem der zweite Lichtleiter (LL2) sichtbares Licht besser leitet als der erste Lichtleiter (LL1).

3. Lichtleitersystem (LLS) nach einem der vorhergehenden Ansprüche,
bei dem der erste Lichtleiter (LL1) in Lichtausbreitungsrichtung kürzer ist als der zweite Lichtleiter (LL2).

4. Lichtleitersystem (LLS) nach einem der vorhergehenden Ansprüche,
bei dem der erste Lichtleiter (LL1) Polymethacrylmethylimid und/oder Polycarbonat umfasst.

5. Lichtleitersystem (LLS) nach einem der vorhergehenden Ansprüche,
bei dem der zweite Lichtleiter (LL2) Polycarbonat umfasst.

6. Lichtleitersystem (LLS) nach einem der vorhergehenden Ansprüche,
bei dem der erste Lichtleiter (LL1) auf dem gleichen Material wie der zweite Lichtleiter basiert, wobei der erste Lichtleiter (LL1) zudem ein Material umfasst, das die Temperaturverträglichkeit des ersten Lichtleiters (LL1) erhöht und/oder die Lichtleitfähigkeit des ersten Lichtleiters (LL1) reduziert.

7. Kraftfahrzeugscheinwerfer mit einem Lichtleitersystem (LLS) nach einem der vorhergehenden Ansprüche, das derart ausgeführt ist, dass von einer Lichtquelle (LQ) erzeugtes Licht mittels des ersten und/oder zweiten Lichtleiters (LL1,LL2) zu einem Leuchtring geführt werden, der durch den zweiten Licht leiter (LL2) gebildet ist.

## Claims

1. An optical fibre system (LLS)
- with a first optical fibre (LL1) and a second optical fibre (LL2),
- wherein the second optical fibre (LL2) is connected downstream of the first optical fibre (LL1) in the light propagation direction,
- wherein the first optical fibre (LL1) is more temperature-tolerant than the second optical fibre (LL2),
- wherein the first optical fibre (LL1) and the second optical fibre (LL2) have at least one mutual absorption line in the infrared spectral range, and
- wherein the second optical fibre comprises plastics material, and
**characterised in that** the first optical fibre comprises plastics material.

2. An optical fibre system (LLS) according to claim 1, wherein the second optical fibre (LL2) conducts visible light better than the first optical fibre (LL1).

3. An optical fibre system (LLS) according to either of the preceding claims, wherein the first optical fibre (LL1) is shorter in the light propagation direction than the second optical fibre (LL2).

4. An optical fibre system (LLS) according to any one of the preceding claims, wherein the first optical fibre (LL1) comprises polymethacrylmethylimide and/or polycarbonate.

5. An optical fibre system (LLS) according to any one of the preceding claims, wherein the second optical fibre (LL2) comprises polycarbonate.

6. An optical fibre system (LLS) according to any one of the preceding claims, wherein the first optical fibre (LL1) is based on the same material as the second optical fibre, wherein the first optical fibre (LL1) also comprises a material which increases the temperature tolerance of the first optical fibre (LL1) and/or reduces the light conductivity of the first optical fibre (LL1).

7. A vehicle headlight with an optical fibre system (LLS) according to any one of the preceding claims, which is configured in such a way that light produced by a light source (LQ) is guided by means of the first and/or the second optical fibre (LL1, LL2) to a light ring, which is formed by the second optical fibre (LL2).

## Revendications

1. Système de guides d'ondes optiques (LLS) comprenant :
- un premier guide d'ondes optiques (LL1) et un second guide d'ondes optiques (LL2),
- le second guide d'ondes optiques (LL2) étant en aval du premier guide d'ondes optiques (LL1) dans la direction de déploiement de la lumière,
- le premier guide d'ondes optiques (LL1) étant plus résistant en température que le second guide d'ondes optiques (LL2),
- le premier guide d'ondes optiques (LL1) et le second guide d'ondes optiques (LL2) ayant, dans la plage spectrale de l'infrarouge, au moins une courbe d'absorption commune, et
- le second guide d'ondes optiques est en matière plastique, et système **caractérisé en ce que**
le premier guide d'ondes optiques est en matière plastique.

2. Système de guides d'ondes optiques (LLS) selon la revendication 1,
**caractérisé en ce que**
le second guide d'ondes optiques (LL2) guide mieux la lumière visible que le premier guide d'ondes optiques (LL1).

3. Système de guides d'ondes optiques (LLS) selon l'une des revendications précédentes,
**caractérisé en ce que**
le premier guide d'ondes optiques (LL1) est plus court dans la direction de déploiement de la lumière que le second guide d'ondes optiques (LL2).

4. Système de guides d'ondes optiques (LLS) selon l'une des revendications précédentes,
**caractérisé en ce que**
le premier guide d'ondes optiques (LL1) comporte du polyméthacrylméthylimide et/ou du polycarbonate.

5. Système de guides d'ondes optiques (LLS) selon l'une des revendications précédentes,
**caractérisé en ce que**
le second guide d'ondes optiques (LL2) comporte du polycarbonate.

6. Système de guides d'ondes optiques (LLS) selon l'une des revendications précédentes,
**caractérisé en ce que**
le premier guide d'ondes optiques (LL1) est à base du même matériau que le second guide d'ondes optiques,
* le premier guide d'ondes optiques (LL1) comporte, en outre, un matériau qui augmente la compatibilité en température du premier guide d'ondes optiques (LL1) et/ou réduit la tenue à la lumière du premier guide d'ondes optiques (LL1).

7. Projecteur de véhicule automobile comportant un système de guides d'ondes optiques (LLS) selon l'une des revendications précédentes, ce guide d'ondes étant réalisé pour qu'une lumière générée par une source lumineuse (LQ) puisse être conduite par le premier et/ou le second guides d'ondes optiques (LL1, LL2) vers un anneau lumineux, formé par le second guide d'ondes optiques (LL2).
